(19) Europäisches Patentamt
European Patent Office
Office européen des brevets

(11) **EP 3 275 106 B1**

(12) **EUROPÄISCHE PATENTSCHRIFT**

(45) Veröffentlichungstag und Bekanntmachung des Hinweises auf die Patenterteilung:
**31.05.2023 Patentblatt 2023/22**

(21) Anmeldenummer: **16711584.9**

(22) Anmeldetag: **18.03.2016**

(51) Internationale Patentklassifikation (IPC):
*H04L 1/18* (2023.01)   *H04L 1/00* (2006.01)
*H04L 1/20* (2006.01)

(52) Gemeinsame Patentklassifikation (CPC):
**H04L 1/1887; H04L 1/0018; H04L 1/20**

(86) Internationale Anmeldenummer:
**PCT/EP2016/055945**

(87) Internationale Veröffentlichungsnummer:
**WO 2016/150843 (29.09.2016 Gazette 2016/39)**

(54) **VERFAHREN UND VORRICHTUNG ZUR KONFIGURATION EINER ÜBERTRAGUNGSVERBINDUNG**

METHOD AND DEVICE FOR THE CONFIGURATION OF A TRANSMISSION LINK

PROCÉDÉ ET DISPOSITIF DE CONFIGURATION D'UNE LIAISON DE TRANSMISSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.03.2015 DE 102015205478**

(43) Veröffentlichungstag der Anmeldung:
**31.01.2018 Patentblatt 2018/05**

(73) Patentinhaber: **Bayerische Motoren Werke Aktiengesellschaft**
**80809 München (DE)**

(72) Erfinder:
• **GOZALVEZ SERRANO, David**
  **80636 München (DE)**
• **RAVANSHID, Azad**
  **81925 München (DE)**

(56) Entgegenhaltungen:
EP-A2- 1 361 690     WO-A1-03/025599
US-A- 5 774 459

• **Elisabeth Uhlemann, Per-Arne Wiberg, Tor M. Aulin, Lars K. Rasmussen: "Deadline Dependent Coding - A Framework for Wireless Real-Time",** nternational Conference on Real Time Computing **Systems and Applications RTCSA 2000, 1. Dezember 2000 (2000-12-01), Seiten 135-142, XP055280689, Gefunden im Internet: URL:http://ieeexplore.ieee.org/iel5/7188/1 9358/00896381.pdf?arnumber=896381 [gefunden am 2016-06-15]**
• **SCHOTTEN HANS D ET AL: "Availability indication as key enabler for ultra-reliable communication in 5G", 2014 EUROPEAN CONFERENCE ON NETWORKS AND COMMUNICATIONS (EUCNC), IEEE, 23. Juni 2014 (2014-06-23), Seiten 1-5, XP032629303, DOI: 10.1109/EUCNC.2014.6882630 [gefunden am 2014-08-22]**
• **STEPHAN PFLETSCHINGER ET AL: "Adaptive HARQ for imperfect channel knowledge", SOURCE AND CHANNEL CODING (SCC), 2010 INTERNATIONAL ITG CONFERENCE ON, IEEE, PISCATAWAY, NJ, USA, 18. Januar 2010 (2010-01-18), Seiten 1-6, XP031657435, ISBN: 978-1-4244-6872-0**

**Beschreibung**

Die Erfindung betrifft im Allgemeinen das Gebiet der drahtlosen Kommunikation mit wenigstens einem mobilen Teilnehmer über einen Kommunikationskanal mit veränderlicher Verfügbarkeit. Im Besonderen betrifft die Erfindung ein Datenübertragungsverfahren sowie eine zugehörige Datenübertragungseinheit, die hinsichtlich der Zuverlässigkeit der Datenübertragung verbessert sind, wobei insbesondere Zuverlässigkeitsanforderungen von Diensten und Anwendungen berücksichtigt werden können.

EP 1 361 690 A2 zeigt ein Verfahren und eine Vorrichtung zum Versenden von Datenpaketen über einen Kommunikationskanal.

SCHOTTEN HANS D ET AL: "Availability indication as key enabler for ultra-reliable communication in 5G", 2014 EUROPEAN CONFERENCE ON NETWORKS AND COMMUNICATIONS (EUCNC), IEEE, 23. Juni 2014 (2014-06-23), Seiten 1-5, XP032629303 zeigt ein Verfahren zur verlässlichen Kommunikation insbesondere über ein Telekommunikationsnetz.

Drahtlose Datenübertragung hat aufgrund ihrer Flexibilität, Kosteneffizienz und Unterstützung von Mobilität ein breites Anwendungsspektrum jenseits der klassischen Mobilkommunikation. Einige Anwendungsbeispiele sind Verkehrssicherheitstechnik, Zugleitsysteme, industrielle Anwendungen und e-Health-Anwendungen. Viele Anwendungen und Dienste sind von der Zuverlässigkeit der Datenübertagung abhängig, das heißt, der erfolgreichen und pünktlichen Übertragung von Informationen. Beispielsweise ist es bei auf drahtloser Datenübertragung basierenden Verkehrssicherheitsanwendungen erforderlich, dass ein sehr hoher Prozentsatz von Sicherheitsmeldungen innerhalb einer bestimmten Zeitspanne korrekt übertragen wird (vgl. Intelligent Transport Systems (ITS); Vehicular Communications; Basic Set of Applications; Definitions, ETSI Technical Report TR 102 638 Rev. 1.1.1, 2009.) Nicht oder fehlerhaft zugestellte Sicherheitsmeldungen stellen ein hohes Gefahrenpotential dar.

Andererseits kann ein drahtloses Datenübertragungssystem in der Praxis nicht so ausgelegt werden, dass es zu jedem Zeitpunkt und unter allen Umständen eine zuverlässige Datenverbindung sicherstellen kann, da ein derartiges System ineffizient und/oder mit einem hohen Energieverbrauch verbunden wäre.

In bekannten drahtlosen Kommunikationssystemen werden bereits verschiedene Verfahren verwendet, um Schwankungen der Übertragungsgüte des Kommunikationskanals auszugleichen und ein Mindestmaß an Zuverlässigkeit der Datenübertragung für Dienste und Anwendungen zu gewährleisten. Beispiele hierfür sind die hybride automatische Wiederholungsanforderung (hybrid automatic repeat request, HARQ) und die adaptive Modulation und Codierung (adaptive modulation and coding, AMC), wie sie beispielsweise in A. J. Goldsmith et al., "Adaptive coded modulation for fading channels", IEEE Transactions on Wireless Communications, vol. 46, no. 5, pp. 595-602, May 1998, oder in "Physical layer procedures (Release 8)", 3GPP technical specification 36.213 für zellulare Kommunikationssysteme, wie z.B. dem 3GPP LTE (Long Term Evolution, LTE), beschrieben werden.

HARQ beruht auf der Kombination von Vorwärtsfehlerkorrektur (Forward Error Correction, FEC) und Übertragungswiederholung von empfängerseitig nicht verwertbaren Daten und wird in HARQ-Typ-I und HARQ-Typ-II unterteilt. Bei HARQ-Typ-I (auch einfache automatische Wiederholungsanforderung oder "plain Automatic Repeat reQest", ARQ) werden fehlerhafte Pakete einfach gelöscht und erneut übertragen. Bei HARQ-Typ-II (auch HARQ mit inkrementeller Redundanz bzw. "incremental redunancy HARQ", IR-HARQ) wird versucht, die bei verschiedenen Übertragungswiederholungen übertragenen fehlerhaften Daten zu kombinieren. Damit kann die Wahrscheinlichkeit für eine erfolgreiche Übertragung erhöht werden. HARQ und AMC oder andere bekannte Maßnahmen können in zellularen Kommunikationssystemen aufgrund der zufälligen Schwankungen der Übertragungsgüte des drahtlosen Kommunikationskanals keine fehlerfreie und pünktliche Datenübertragung gewährleisten, d.h. mit einer 100%-igen Wahrscheinlichkeit sicherstellen.

Dienste wie Verkehrssicherheitsanwendungen benötigen jedoch bei der Datenübertragung eine sehr hohe und vorhersagbare Erfolgsrate (z.B. 99,999%) bei sehr kurzen maximalen Zeitspannen (z.B. 10 ms), innerhalb derer die Datenübertragung erfolgt sein muss. Daher wurde bereits vorgeschlagen, einen Dienst oder eine Anwendung, die eine zuverlässige Datenübertragung benötigt, über die Verfügbarkeit bzw. Nichtverfügbarkeit einer zuverlässigen Datenübertragungsverbindung zu informieren. Beispielsweise wird in der noch nicht veröffentlichen deutschen Patentanmeldung DE 10 2013 221 649.1 derselben Anmelderin ein Datenübertragungsverfahren sowie eine zugehörige Datenübertragungseinheit zur Bereitstellung eines zuverlässigen Kommunikationskanals für eine Echtzeitanwendung vorgeschlagen, wobei die Verfügbarkeit eines zuverlässigen Kommunikationskanals vorhergesagt und mittels einer Verfügbarkeitsanzeige angezeigt wird. Das Datenübertragungskonzept der DE 10 2013 221 649.1 basiert auf der Idee, vor der Übertragung von Daten eine Verfügbarkeitswahrscheinlichkeit des Kommunikationskanals zu ermitteln und Daten nur bei ausreichender Verfügbarkeitswahrscheinlichkeit zu übertragen. D. h., eine Datenübertragung soll nur dann stattfinden, wenn die Wahrscheinlichkeit von Datenübertragungsfehlern sehr gering ist bzw. gegen Null geht.

Zeitspannenabhängige Codierung (deadline dependent coding, DDC), wie sie beispielsweise in E. Uhlemann et al., "Deadline dependent coding - a framework for wireless real-time communication", International Conference on Real-Time Computing Systems and Applications", Dec. 2000, pp. 135-142 beschrieben wird, ist eine Art HARQ. Bei der DDC wird versucht, Echtzeit-Anforderungen durch eine Datenübertragung mit einer bestimmten Wahrscheinlichkeit $P_{DL}$ vor Ablauf einer Zeitspanne $t_d$ zu erfüllen. Dazu werden die Coderate und die Anzahl der Übertragungswiederholungen a priori so berechnet, dass die zuverlässigkeitsrelevanten Parameter $t_d$ und $P_{DL}$ erreicht werden können.

Besonders Diensten für und Anwendungen mit sicherheitsrelevanten Funktionen haben hohe Zuverlässigkeitsanforderungen an Datenübertragungsverbindungen. Die Zuverlässigkeitsanforderungen werden hier als die erfolgreiche Übertragung von zu übertragenden Daten innerhalb einer bestimmten Zeitspanne mit einer bestimmten Wahrscheinlichkeit definiert. Aktuelle zellulare Kommunikationssysteme berücksichtigen derzeit derartige Zuverlässigkeitsanforderungen von Dienten und Anwendungen nicht, um die Datenübertragung zu konfigurieren. Dies beschränkt die Möglichkeiten besonders eines zellularen Kommunikationssystems, die Zuverlässigkeit zu gewährleisten, und verringert gleichzeitig seine Effizienz.

Im Stand der Technik, wie z.B. bei der o.g. DDC, werden Zuverlässigkeitsanforderungen von Diensten und Anwendungen hinsichtlich der Zeitspanne und der Wahrscheinlichkeit einer korrekten Datenübertragung vor Ablauf der Zeitspanne lediglich berücksichtigt, um die Größe von Übertragungsblöcken und die Anzahl von Übertragungswiederholungen zu konfigurieren. Bei der DDC wird die Konfiguration a priori berechnet, wobei über alle möglichen Kommunikationskanalparameter gemittelt wird. Daher ist es nicht möglich, die DDC den zeitlichen Schwankungen der Übertragungseigenschaften des Kommunikationskanals in Echtzeit anzupassen.

Es ist Aufgabe der vorliegenden Erfindung ein Datenübertragungsverfahren anzugeben, welches hinsichtlich der Zuverlässigkeit der Datenübertragung, insbesondere hinsichtlich der Berücksichtigung von Zuverlässigkeitsanforderungen von Echtzeit-Diensten und -Anwendungen, verbessert ist. Weiter soll eine entsprechende Datenübertragungseinheit bereitgestellt werden, welche insbesondere zur Bereitstellung eines zuverlässigen Kommunikationskanals für eine Echtzeitanwendung oder einen Echtzeitdienst ausgebildet ist. Des Weiteren soll ein Fahrzeug mit einer entsprechenden Datenübertragungseinheit angegeben werden.

Die Aufgabe wird mit den jeweiligen Merkmalen der unabhängigen Ansprüche gelöst. Weitere Ausführungsbeispiele und vorteilhafte Weiterbildungen ergeben sich aus den jeweiligen Unteransprüchen, der Beschreibung und den Zeichnungen. Dabei gelten Merkmale und Details, die im Zusammenhang mit den Datenübertragungsverfahren beschrieben sind, selbstverständlich auch im Zusammenhang mit den entsprechenden Datenübertragungseinheiten bzw. dem Datenübertragungssystem und jeweils umgekehrt.

Ein Kerngedanke der Erfindung liegt darin, in ein auf dem HARQ-Konzept basierenden Datenübertragungsverfahren, wie beispielsweise der DDC, das Konzept der Verfügbarkeitsanzeige eines Kommunikationskanals zu integrieren. Dabei berücksichtigt das Datenübertragungsverfahren vorgegebene Zuverlässigkeitsanforderungen der bzw. des den Kommunikationskanal nutzenden Anwendung bzw. Diensts bei der bzw. für die Konfiguration der Datenübertragung. Im Ergebnis wird zum einen die Zuverlässigkeit der Datenübertragung für den Dienst bzw. die Anwendung, aber auch die Effizienz des Gesamtsystems verbessert.

Ein erster Aspekt der Erfindung betrifft ein Verfahren zur Datenübertragung an einer senderseitigen Datenübertragungseinheit mit den Schritten:

a) Empfangen einer Datenübertragungsanfrage für ein Datenpaket von einer mit der Datenübertragungseinheit betriebsmäßig verbundenen Echtzeitanwendung;
b) Übertragen eines ersten Abschnitts des Datenpakets an eine empfängerseitige Datenübertragungseinheit über einen Kommunikationskanal;
c) Empfangen eines Verfügbarkeitsindikators für den Kommunikationskanal von der empfängerseitigen Datenübertragungseinheit; und
d) Wenn der Verfügbarkeitsindikator anzeigt, dass der Kommunikationskanal verfügbar ist, Konfigurieren der noch zu übertragenden Daten des Datenpakets für eine erfolgreiche Übertragung innerhalb der noch verfügbaren Zeit einer durch die Echtzeitanwendung bestimmten maximal zulässigen Datenübertragungszeit für das Datenpaket, und Übertragen des Datenpakets.

Im Schritt a) können von der Echtzeitanwendung Informationen zur Datenmenge und/oder zur maximal zulässigen Datenübertragungszeit und/oder zu einer maximal zulässigen Übertragungsfehlerrate an die senderseitige Datenübertragungseinheit übermittelt werden. Diese Randbedingungsdaten können auch der empfängerseitigen Datenübertragungseinheit mit dem einen ersten Abschnitt des Datenpakets übermittelt werden und/oder können in der empfängerseitigen Datenübertragungseinheit vorkonfiguriert sein und/oder können in einer zentralen Datenbank (einem Server) des Kommunikationssystem abrufbar gespeichert sein.

Das Übertragen des ersten Abschnitts des Datenpakets dient als Grundlage zur empfängerseitigen Vorhersage der Verfügbarkeit des Kommunikationskanals für den aktuellen Übertragungshorizont. Unter dem aktuellen Übertragungshorizont wird hier die Differenz aus der maximal zulässigen Datenübertragungszeit für das Datenpaket abzüglich der bereits abgelaufenen Zeit für eine oder ggf. mehrere (noch zu erläuternde) bereits erfolgte Übertragungen des ersten Abschnitts zuzüglich etwaiger Pausen etc. innerhalb der aktuellen Datenübertragungszeit verstanden.

Der erste Abschnitt des Datenpakets dient als Grundlage für eine empfängerseitige Messung von (für die Übertragungszuverlässigkeit relevanten) Parametern des Kommunikationskanals für die Vorhersage der Verfügbarkeit des Kommunikationskanals.

Die Länge des ersten Abschnitts des Datenpakets kann durch die Einstellung einer bestimmten Anzahl von Informationssymbolen und/oder Zeitschlitzen bestimmt sein. Die Länge des ersten Abschnitts kann insbesondere im Hinblick auf den aktuellen Übertragungshorizont und die Zeitvarianz der Parameter des Kommunikationskanals bestimmt werden. Bei sehr schnell schwankenden Parametern des Kommunikationskanals wird der erste Abschnitt bevorzugt kurz eingestellt. Bei langsam schwankenden Parametern des Kommunikationskanals wird der erste Abschnitt bevorzugt lang eingestellt. Bevorzugt wird die Länge des ersten Abschnitts basierend auf der Kohärenzzeit des Kommunikationskanals bestimmt. Damit ist die Länge des ersten Abschnitts nicht von der maximal zulässigen Datenübertragungszeit abhängig. Generell empfiehlt es sich, bei einem sehr schnell schwankenden Kommunikationskanal (z.B. während des Fahrens mit Hochgeschwindigkeit), die Länge des ersten Abschnitts mit mehreren Millisekunden (ms) vorzusehen. Bei einem langsam schwankenden Kommunikationskanal (z.B. während des Fahrens mit geringerer Geschwindigkeit) hingegen kann die Länge des ersten Abschnitts mehrere Hundert ms betragen.

Unter der Kohärenzzeit des Kommunikationskanals wird hier die Zeitspanne verstanden, innerhalb der die Koeffizienten der Impulsanwort des Kommunikationskanals als konstant angenommen werden können.

Das Verfahren kann weiter die folgenden Schritte aufweisen:

> e) Wenn die Verfügbarkeitsanzeige anzeigt, dass der Kommunikationskanal nicht verfügbar ist, Abbrechen der Übertragung des Datenpakets; und
> f) nach einer vorbestimmten Pause, Wiederholen des Verfahrens ab dem Schritt b), falls noch genügend Zeit für die Übertragung des Datenpakets bis zum Ablauf der maximal zulässigen Datenübertragungszeit für das Datenpaket, d.h. bis zum aktuellen Übertragungshorizont, zur Verfügung steht.

Das Konfigurieren der noch zu übertragenden Daten des Datenpakets für eine erfolgreiche Übertragung innerhalb der noch verfügbaren Zeit einer durch die Echtzeitanwendung bestimmten maximal zulässigen Datenübertragungszeit für das Datenpaket beinhaltet in dem Schritt iv): Einstellen der Anzahl und der Länge noch zu übertragender Datenblöcke des Datenpakets unter Berücksichtigung zu erwartender Übertragungswiederholungen einzelner Datenblöcke.

Die senderseitige Datenübertragungseinheit kann, falls ermittelt wurde, dass der Kommunikationskanal nicht verfügbar ist, eine Datenübertragungsverbindung zu der zugehörigen empfängerseitigen Datenübertragungseinheiten abbrechen und den zugeordneten Kommunikationskanal zur Verwendung durch eine andere Datenübertragungseinheiten freigeben. Dies kann bevorzugt bereits auf bzw. an der physikalischen (PHY) und/oder Medium Access Control (MAC) Schicht des verwendeten Übertragungsprotokolls implementiert werden. Damit lässt sich eine opportunistische Zuweisung von Teilnehmern zu Kommunikationskanälen eines Kommunikationssystems basierend auf der jeweils ermittelten Verfügbarkeit des Kommunikationskanals erreichen. Dies ist besonders für die Effizienz von Kommunikationssystemen mit mehreren Teilnehmern (multiuser system) von Vorteil, in denen verschiedene Nachrichten an verschiedene Teilnehmer im Abdeckungsbereich des Kommunikationssystems übertragen werden sollen. Die senderseitige Datenübertragungseinheit kann beispielsweise eine Basisstation eines Mobilfunksystems sein und eingerichtet sein, Kommunikationskanäle als begrenzte Funkressource des Mobilfunksystems nur solchen Teilnehmern zuzuweisen, für die eine positive Verfügbarkeit gemäß den Zuverlässigkeitsanforderungen der bzw. des den Kommunikationskanal nutzenden Anwendung bzw. Dienstes des Kommunikationskanals festgestellt worden ist. Mit anderen Worten wird für solche Teilnehmer, für welche die Verfügbarkeit des Kommunikationskanals als nicht verfügbar bestimmt worden ist, eine angestoßene Datenübertragung gestoppt bis günstigere Kommunikationskanaleigenschaften vorliegen, d.h. der Kommunikationskanal entsprechend den hier definierten Kriterien verfügbar ist.

Ein zweiter Aspekt der Erfindung betrifft ein Verfahren zur Datenübertragung an einer empfängerseitigen Datenübertragungseinheit mit den Schritten:

> i) Empfangen eines ersten Abschnitts eines Datenpakets von einer senderseitigen Datenübertragungseinheit über einen Kommunikationskanal;
> ii) Bestimmen eines Verfügbarkeitsanzeigers für die Verfügbarkeit des Kommunikationskanals basierend auf während des Empfangens des ersten Abschnitts des Datenpakets gemessenen Parametern des Kommunikationskanals und basierend auf vorhergesagten Parametern des Kommunikationskanals für den noch zur Verfügung stehenden Rest einer vorbestimmten maximal zulässigen Datenübertragungszeit für die Übertragung des Datenpakets;
> iii) Senden des bestimmten Verfügbarkeitsanzeigers an die senderseitige Datenübertragungseinheit;
> iv) wenn der bestimmte Verfügbarkeitsanzeiger anzeigt, dass der Kommunikationskanal verfügbar ist, Empfangen des restlichen Datenpakets.

Die Bestimmung der Verfügbarkeit des Kommunikationskanals im Schritt b) erfolgt bevorzugt basierend auf während der Übertragung des ersten Abschnitts des Datenpakets gemessenen und für den restlichen Zeitraum bis zum aktuellen Übertragungshorizont vorhergesagten Parametern des Kommunikationskanals.

Die Parameter für den Kommunikationskanal können einer oder eine Kombination der folgenden sein:

eine ACK-Statistik, eine NACK-Statistik, SINR-Werte, Schwankungswerte bzgl. des Kommunikationskanals im Zeitbereich, Kohärenzzeiten des Kommunikationskanals, ein Betrag einer Differenzträger-Interferenz in einem orthogonalen Frequenzmultiplexsystem (OFDM), eine Dopplerfrequenz, CQI-Werte, RSSI-Werte, RSRQ-Werte, RSCP-Werte, MIMO-Rank-Werte, Ec/Io-Wertes, QCI-Wertes.

Bezüglich der genannten Parameter sei auf folgende Kurzerklärungen verwiesen:

- ACK (ACKnowledge) beschreibt ein Signal zur Bestätigung einer Datenübertragung.
- NACK (Not ACKnowledged) beschreibt die Ablehnung von übertragenen Daten und dessen Quittierung.
- SINR (Signal-to-Interference-and-Noise-Ratio) ist der Signalstörabstand.
- CQI (Channel Quality Indicator, CQI) ist ein Messwert für die Kommunikationsqualität eines drahtlosen Kommunikationskanals.
- RSSI (Received Signal Strengths Indicator) ist ein Indikator für die Empfangsfeldstärke eines drahtlosen Kommunikationkanals.
- RSRQ (Reference Signal Received Quality) ist ein berechneter Verhältniswert, der sich aus dem Wert für RSRP und dem RSSI ergibt; der RSRQ dient zur Beurteilung einer LTE-Verbindung bzw. der Empfangsqualität von mobilen Endgeräten.
- RSCP (Received Signal Code Power) beschreibt die beim Empfänger eines Kommunikationskanals gemessene Leistung.
- Ec/Io gibt das Verhältnis der mittleren Leistung des Kommunikationskanals zur Gesamtsignalstärke an.
- MIMO-Rank (Multiple-Input-and-Multiple-Output Rank) bezeichnet in der Nachrichtentechnik die Nutzung mehrere Sende-und Empfangsantennen zur drahtlosen Kommunikation, wobei Rank das Verhältnis zueinander beschreibt.
- QCI (Quality Class Indicator) wird in der LTE-Technik zur Unterteilung verschiedener Anwendungen mit unterschiedlichen "packets delay budgets" und "packet error loss rates" verwendet.

Der Schritt iv) kann weiter aufweisen: 1) Berechnen eines Werts für den kumulierten Transinformationsgehalt (ACcumulated Mutual Information, ACMI) nach jeder Übertragungswiederholung eines Datenblocks des Datenpakets und 2) Vergleichen des berechneten ACMI-Werts mit dem ACMI-Wert gemäß der geschätzten Parameter für den Kommunikationskanal; und 3) Übermitteln einer angepassten Datenblockgröße an die senderseitige Datenübertragungseinheit zur Kompensation von Abweichungen zwischen dem berechneten ACMI-Wert und dem geschätzten ACMI-Wert. Damit können Vorhersagefehler bei den Parametern für den Kommunikationskanal kompensiert werden, welche die Konfiguration der noch zu übertragenden Daten des Datenpakets für eine erfolgreiche Übertragung innerhalb der noch verfügbaren Zeit bis zum aktuellen Übertragungshorizont negativ beeinflussen.

Ein dritter Aspekt der Erfindung betrifft eine senderseitige Datenübertragungseinheit zur Bereitstellung eines Kommunikationskanals für eine Echtzeitanwendung, wobei die Datenübertragungseinheit aufweist: mindestens eine Datenausgabe-/Empfangseinheit, mindestens eine Verfügbarkeitsermittlungseinheit zur Ermittlung der Verfügbarkeit eines Kommunikationskanals zwischen der Datenausgabe-/Empfangseinheit der Datenübertragungseinheit und mindestens eine empfängerseitige Datenübertragungseinheit, wobei die Verfügbarkeitsermittlungseinheit zur Durchführung eines Verfahrens gemäß des ersten Aspekts der Erfindung eingerichtet ist.

Ein vierter Aspekt der Erfindung betrifft eine empfängerseitige Datenübertragungseinheit zur Bereitstellung eines Kommunikationskanals für eine Echtzeitanwendung, wobei die empfängerseitige Datenübertragungseinheit aufweist: mindestens eine Datenausgabe-/Empfangseinheit, mindestens eine Verfügbarkeitsermittlungseinheit zur Ermittlung der Verfügbarkeit eines Kommunikationskanals zwischen der Datenausgabe-/Empfangseinheit der Datenübertragungseinheit und mindestens einer senderseitigen Datenübertragungseinheit, wobei die Verfügbarkeitsermittlungseinheit zur Durchführung eines Verfahrens gemäß dem zweiten Aspekt der Erfindung eingerichtet ist.

Es sei angemerkt, dass eine Datenübertragungseinheit sowohl als senderseitige Datenübertragungseinheit gemäß dem dritten Aspekt als auch als empfängerseitige Datenübertragungseinheit gemäß dem vierten Aspekt konfiguriert sein kann. D.h., eine solche Datenübertragungseinheit kann sowohl die Rolle der sendenden Datenübertragungseinheit als auch der empfangenden Datenübertragungseinheit erfüllen.

Ein weiterer Aspekt der Erfindung betrifft somit eine Datenübertragungseinheit zur Bereitstellung eines Kommunikationskanals für eine Echtzeitanwendung, wobei die Datenübertragungseinheit aufweist: mindestens eine Datenausgabe-/Empfangseinheit, mindestens eine Verfügbarkeitsermittlungseinheit zur Ermittlung der Verfügbarkeit eines Kommunikationskanals zwischen der Datenausgabe-/Empfangseinheit der Datenübertragungseinheit und mindestens eine senderseitigen Datenübertragungseinheit, wobei die Verfügbarkeitsermittlungseinheit zur Durchführung eines Verfahrens gemäß dem ersten und dem zweiten Aspekt der Erfindung eingerichtet ist.

Die Datenübertragungseinheit des dritten, vierten und weiteren Aspekts der Erfindung können weiter aufweisen: eine Verfügbarkeitsausgabeeinheit, die zur Ausgabe des Verfügbarkeitsindikators ausgebildet ist, und/oder eine Datenübertragungsanfrageeinheit, welche zum Auslösen einer Verfügbarkeitsanfrage an die Verfügbarkeitsermittlungseinheit ausgebildet ist.

Bevorzugt weist die Datenübertragungseinheit des vierten und weiteren Aspekts der Erfindung für ihre empfängerseitige Rolle eine oder mehrere Erfassungseinheiten zur Erfassung mindestens eines der oben genannten Parameter des Kommunikationskanals auf, welche eingerichtet ist, die erfassten bzw. gemessenen Parameterdaten an die Verfügbarkeitsermittlungseinheit zu übermitteln. Die von der Einheit oder den Einheiten zur Überwachung von Kommunikationskanalparametern ermittelten Daten werden an die Verfügbarkeitsermittlungseinheit gesendet bzw. übermittelt, sodass die Verfügbarkeit des Kommunikationskanals u. a. in Abhängigkeit dieser Parameter ermittelt werden kann.

Ein fünfter Aspekt der Erfindung betrifft ein Datenkommunikationssystem mit wenigsten einer senderseitigen Datenübertragungseinheit gemäß dem dritten oder weiteren Aspekt der Erfindung und einer empfängerseitigen Datenübertragungseinheit gemäß dem vierten oder weiteren Aspekt der Erfindung.

Die Datenübertragungseinheiten dienen bevorzugt zur Bereitstellung eines Kommunikationskanals für eine Echtzeitanwendung. Der Kommunikationskanal wird bevorzugt zwischen einer erfindungsgemäßen senderseitigen Datenübertragungseinheit und mindestens einer weiteren empfängerseitigen Datenübertragungseinheit aufgebaut.

Bei der empfängerseitigen und/oder senderseitigen Datenübertragungseinheit kann es sich auch um eine Basisstation eines Kommunikationsnetzes handeln, so dass eine Datenübertragung bzw. die Bereitstellung eines Kommunikationskanals für eine Echtzeitanwendung zwischen einer erfindungsgemäßen Datenübertragungseinheit und einer weiteren Datenübertragungseinheit über das Kommunikationsnetz erfolgen kann. Die Datenübertragungseinheiten können jeweils auch als Vorrichtungen angesehen werden bzw. ausgebildet sein und entsprechende Vorrichtungs-Merkmale wie z.B. elektrische Komponenten, einen elektronischen Schaltkreis, einen Mikroprozessor zum Abarbeiten von Kommandos eines Computerprogramms usw. aufweisen, so dass jeweils ein erfindungsgemäßer Verfahrensablauf bewirkt wird.

Im Folgenden wird das Zusammenspiel des Verfahrens zur Datenübertragung an einer senderseitigen Datenübertragungseinheit mit dem Verfahren zur Datenübertragung an einer empfängerseitigen Datenübertragungseinheit beispielhaft erläutert.

Zu einem Zeitpunkt $t_i$ soll an der senderseitigen Datenübertragungseinheit eine Nachricht $m_i$ über $J$ Übertragungsblöcke mit einer Länge von $\tau_{ij}$ Zeitschlitzen (im Beispiel sei angenommen, dass die Dauer jedes Zeitschlitzes der Zeitdauer für die Übertragung von einem Bit entspricht), d.h. $\tau_{ij} \in N$ und j = 1,···,J mit einer seitens der Echtzeitanwendung geforderten maximalen Übertragungszeit $T$ übertragen werden, wobei

$$\sum_j \tau_{ij} \leq T$$

gilt. Nach Empfang der übertragenen Übertragungsblöcke über eine erste Anzahl $\omega_i$ von Zeitschlitzen, wird an der empfängerseitigen Datenübertragungseinheit ein für die Verfügbarkeit des Kommunikationskanals relevanter Parameter, beispielsweise der Signalstörabstand SINR für die nachfolgenden $T$ - $\omega_i$ Zeitschlitze bis zur maximalen Übertragungszeit $T$ vorhergesagt bzw. vorausgeschätzt. Die Vorhersage kann beispielsweise mittels einer linearen Extrapolation erfolgen, wie sie z.B. in M. Ni et al., "A channel feedback model with robust SINR prediction LTE systems", IEEE European Conference on Antenna and Propagation, EuCAP, pages 1866 - 1870, 2013 erläutert ist.

Basierend auf den für den Kommunikationskanal während der ersten Zeitschlitze $\omega_i$ gemessen Parameter (z.B. SINR) und für die nachfolgenden Zeitschlitze $T$ - $\omega_i$ vorhergesagten Parameterwerte (z.B. SINR) bestimmt die empfängerseitige Datenübertragungseinheit die Verfügbarkeit des Kommunikationskanals, d.h., ob der Kommunikationskanal zuverlässig genug ist. Die so bestimmte Verfügbarkeit wird von der empfängerseitigen Datenübertragungseinheit der senderseitigen Datenübertragungseinheit mittels des Verfügbarkeitsindikators mitgeteilt.

Falls der Kommunikationskanal als ausreichend zuverlässig ermittelt wurde, dieser also als verfügbar eingestuft wird, kann die Datenübertragung der Nachricht bis zum Ende des Übertragungsblocks fortgesetzt werden. Anderenfalls, wenn der Kommunikationskanal als nicht ausreichend zuverlässig ermittelt wurde, dieser also als nicht verfügbar eingestuft wird, kann die Datenübertragung abgebrochen werden. Die bis dahin bereits an der empfängerseitigen Datenübertragungseinheit empfangenen Daten bis zum Zeitpunkt $t_i + \omega_i$, die sich beispielsweise in einem Empfangspufferspeicher befinden, werden verworfen.

Wie bereits oben beschrieben, kann die senderseitige Datenübertragungseinheit nach einer vorbestimmten Pause $\delta$ das senderseitige Verfahren wiederholen, solange noch genügend Zeit bis zum Ablauf der maximal zulässigen Übertragungszeit T zur Verfügung steht. Die empfängerseitige Datenübertragungseinrichtung wird dann ebenfalls immer nach der Übertragung der ersten $\omega_i$ Bit erneut die Verfügbarkeit des Kommunikationskanals, wie oben beschrieben, bestimmen, solange noch ausreichend Zeit für die Übertragung des Datenpakets zur Verfügung steht, nämlich

$$\sum_{i=1}^{J} \tau_{ij} + (J-1)\vartheta \leq T - n(\omega_i + \delta),$$

wobei $\vartheta$ eine Laufzeitverzögerung zwischen aufeinanderfolgenden Übertragungsblöcken ist, und $n$ der Zähler dafür ist, wie oft der Kommunikationskanal als nicht verfügbar, d.h. nicht zuverlässig genug, eingestuft worden ist.

Ein sechster Aspekt der Erfindung betrifft ein Fahrzeug mit einer senderseitigen Datenübertragungseinheit gemäß dem dritten Aspekt der Erfindung und/oder einer empfängerseitigen Datenübertragungseinheit gemäß dem vierten Aspekt der Erfindung bzw. einer Datenübertragungseinheit gemäß dem weiteren Aspekt der Erfindung.

Bevorzugt weist das Fahrzeug eine Recheneinheit auf, welche die Echtzeitanwendung, insbesondere eine Fahrerassistenzfunktionalität, wie z. B. ein Bremsassistenzsystem, implementiert. Es ergeben sich ähnliche Vorteile, wie sie bereits in Verbindung mit der senderseitigen und empfängerseitigen Datenübertragungseinheit beschrieben wurden.

Wenn die Echtzeitanwendung eine Fahrerassistenzfunktionalität implementiert, kann die Datenübertragungseinheit des Fahrzeugs mit mindestens einem Sensor zur Bestimmung eines Fahrzeugparameters betriebsmäßig zur Übermittlung von Sensordaten an die Verfügbarkeitsermittlungseinheit in Verbindung stehen. Der Sensor kann zur Bestimmung der Fahrzeuggeschwindigkeit und/oder zur Bestimmung der Fortbewegungsrichtung und/oder zur Bestimmung des Abstandes zu einem Hindernis eingerichtet sein. Der Sensor kann mindestens eine Kamera und/oder ein Radarsystem und/oder ein LIDAR-System sein.

Die Ermittlung der Verfügbarkeit des Kommunikationskanals im Schritt c) des Verfahrens gemäß dem zweiten Aspekt kann abhängig von Fahrzeugparametern, insbesondere in Abhängigkeit einer Fahrzeuggeschwindigkeit und/oder einer Fortbewegungsrichtung des Fahrzeuges und/oder von Positionsdaten des Fahrzeuges und/oder eines Abstandes zu einem weiteren Fahrzeug, erfolgen.

Die Verfügbarkeit des Kommunikationskanals kann in einer Anzeigeeinheit des Fahrzeugs einem Fahrer des Fahrzeugs, bevorzugt mittels eines Symbols in einem Fahrerinformationssystem, beispielsweise in einem Kombiinstrument oder einem Head-up-Display, angezeigt werden. Die Anzeige des Verfügbarkeitsindikators kann als absolute Anzeige erfolgen, d.h. es kann eine Anzeige dahingehend erfolgen, ob ein Kommunikationskanal verfügbar ist oder nicht. In diesem Zusammenhang ist lediglich zwischen zwei Anzeigesymbolen zu unterscheiden. Gibt die Anzeigeeinheit zur Anzeige der Verfügbarkeit des Kommunikationskanals beispielsweise keine Verfügbarkeit des Kommunikationskanals wieder, kann der Fahrer daraus schließen, dass sein Fahrzeug keine Verbindung bzw. keine Kommunikation mit anderen Fahrzeugen aufbauen kann. Beispielsweise kann dies bedeuten, dass ein Bremsassistenzsystem des Fahrzeugs nicht die Signale eines vorherfahrenden Fahrzeuges empfangen kann. Der Fahrer ist somit darüber informiert, dass das Bremsassistenzsystem möglicherweise nicht automatisch eingreift, so dass der Fahrer zu erhöhter Aufmerksamkeit aufgefordert wird. Auch kann die fehlende Verfügbarkeit eines Kommunikationskanals bedeuten, dass keine Datenverbindung zu einem Dienst, der auf einem Back-End-Server läuft, der über eine Basisstation eines Kommunikationsnetzes erreichbar ist, aufgebaut werden kann. Ein solcher Dienst kann beispielsweise ein Informationsdienst für die aktuelle Verkehrslage sein. Bei fehlender Datenverbindung weiß der Fahrer, dass die in seinem Navigationssystem verwendeten Verkehrslagedaten nicht aktuell sind bzw. nicht vorliegen und daher Staus nicht umfahren werden etc.

Die Fahrerassistenzfunktionalität kann beispielsweise eingerichtet sein, basierend auf der Verfügbarkeit des Kommunikationskanals eine Entscheidung zur Einleitung einer Fahrerassistenzmaßnahme zu treffen, insbesondere zur Einleitung eines Lenkeingriffes und/oder einer Fahrzeugbeschleunigung und/oder eines Bremsvorganges und/oder einer Geschwindigkeitsverzögerung in einem ersten Modus und/oder einem zweitem Modus eingerichtet sein. Die Fahrerassistenzfunktionalität wird bevorzugt im ersten Modus in Abhängigkeit von vom Kommunikationskanal empfangenen Daten und im zweiten Modus in Abhängigkeit von Daten des mindestens einen Sensors zur Bestimmung eines Fahrzeugparameters betrieben. Ein Wechsel vom ersten Modus in den zweiten Modus und umgekehrt erfolgt bevorzugt in Abhängigkeit der Verfügbarkeit des Kommunikationskanals.

Es sei angemerkt, dass die Datenübertragungseinheit grundsätzlich ein mobiles Kommunikationsgerät, z.B. ein Mobilfunktelefon, aber auch ein Bordcomputer eines Fahrzeugs mit entsprechenden Kommunikationsschnittstellen sein kann.

Die Datenausgabe-/Datenempfangseinheit kann eine Nahbereichsfunkeinheit, wie beispielswiese eine Wi-Fi-Einheit und/oder eine Bluetooth-Einheit und/oder eine ZigBee-Einheit, aber auch zusätzlich oder alternativ eine Mobilfunk-Einheit sein. Als Mobilfunk-Einheit kann diese beispielweise auf einem 3GPP Standard, wie dem LTE Standard oder einem zukünftigen Mobilfunkstandard, wie z.B. dem 5G Standard, basieren. Die Datenausgabe-/Datenempfangseinheit kann selbstverständlich alternativ oder zusätzlich auf einem anderen Kommunikationsstandard für drahtlose Kommunikation, wie beispielsweise dem 802.11p oder einem zukünftigen Standard, basieren.

Ferner sei angemerkt, dass sofern die Datenübertragungseinheit nicht in ein Fahrzeug sondern andere Systeme bzw. Einheiten implementiert ist, kann es sich bei der Echtzeitanwendung beispielsweise um automatische Zugkontrollsysteme, e-Health-Services und vergleichbare industrielle Anwendungen (Applikationen) handeln.

Abschließend sei angemerkt, dass die erfindungsgemäßen Verfahren bzw. Datenübertragungseinheiten nicht nur in Automotive-Anwendungen sondern auch auf sämtliche andere drahtlosen Übertragungssystemen bzw. Anwendungen angewendet werden können. Dies gilt sowohl für drahtlose Kommunikationssysteme, welche auf einer direkten Device-to-Device-Kommunikation, wie z.B. dem Standard 802.11p, oder auf einer infrastrukturbasierten Kommunikation, wie z.B. 3GPP LTE, basieren.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigte und beschriebene Ausführungsform ist nicht als abschließend zu verstehen, sondern hat beispielhaften Charakter zur Erläuterung der Erfindung. Die Beschreibung dient der Information des Fachmanns, daher werden in der Beschreibung bekannte Schaltungen, Strukturen und Verfahren nicht im Detail gezeigt oder erläutert, um das Verständnis nicht zu erschweren.

Figur 1 veranschaulicht schematische ein Datenübertragungsverfahren zwischen zwei Datenübertragungseinheiten über einen Kommunikationskanal.

Figur 2 zeigt drei Ablaufbeispiele des Datenübertragungsverfahrens der Figur 1.

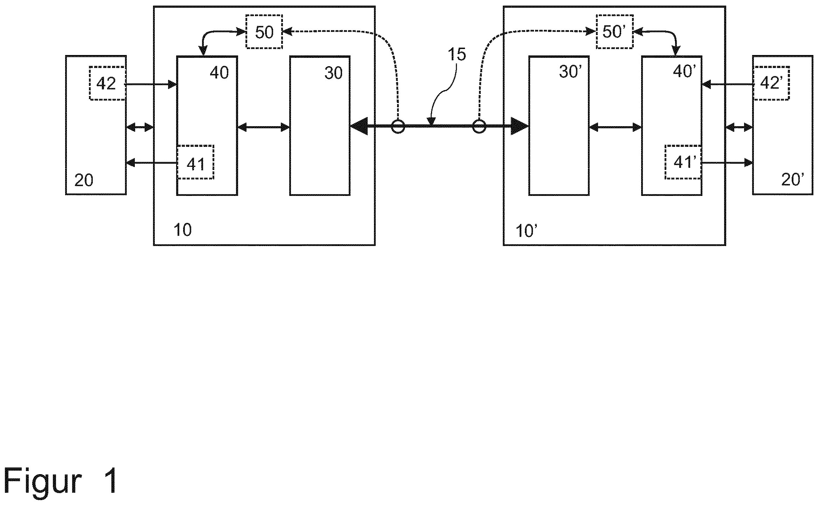

Fig. 1 zeigt eine erste Datenübertragungseinheit 10 und eine zweite Datenübertragungseinheit 10', die zur Datenübertragung zwischen einer senderseitigen Echtzeitanwendung 20 und einer empfängerseitigen Echtzeitanwendung 20' einen Kommunikationskanal 15 bereitstellen.

Die Echtzeitanwendungen 20, 20' können beispielsweise jeweils eine Fahrzeugsicherheitsanwendung sein, wie z.B. ein Bremsassistent eines Fahrerassistenzsystem. Dann befinden sich die erste und die zweite Datenübertragungseinheit 10, 10' jeweils in einem zugehörigen ersten bzw. zweiten Fahrzeug. Mit anderen Worten können die Echtzeitanwendungen 20, 20' identische oder komplementäre Funktionen implementieren.

Die Echtzeitanwendung kann aber auch eine Client-Echtzeit-Anwendung 20' in einem Fahrerinformationssystem eines Fahrzeugs sein, die über eine Datenverbindung mit einer Host-Echtzeit-Anwendung 20 auf einem Back-End-Server kommuniziert. Dann befindet sich die zweite Datenübertragungseinheit 10' in einem zugehörigen Fahrzeug und die erste Datenübertragungseinheit 10 beispielsweise in einer Basisstation eines Funkkommunikationsnetzes bzw. Mobilkommunikationsnetzes, wie z.B. dem derzeit aktuellen 3GPP LTE Mobilkommunikationsnetz. Auf dem Back-End-Server kann beispielsweise als Host-Echtzeit-Anwendung 20 ein Dienst laufen, der Teilnehmer über die aktuelle Verkehrslage (Verkehrsdichte, Staus etc.) informiert. Bei der Client-Echtzeit-Anwendung 20' kann es sich dann beispielsweise um ein Navigationssystem des Fahrzeugs handeln, welches dem Fahrer die aktuelle Verkehrslage grafisch anzeigt bzw. die Informationen über die aktuelle Verkehrslage bei der Navigation berücksichtigt. Mit anderen Worten konsumiert die Client-Echtzeit-Anwendung 20' den Dienst, der von der Host-Echtzeit-Anwendung 20 bereitgestellt wird. Damit besteht eine Client-Server-Beziehung zwischen den Echtzeit-Anwendungen 20, 20'.

Die erste und die zweite Datenübertragungseinheit 10, 10' umfasst jeweils eine Datenausgabe-/Datenempfangseinheit 30, 30' sowie jeweils eine Verfügbarkeitsermittlungseinheit 40, 40'. Die Verfügbarkeitsermittlungseinheiten 40, 40' dienen jeweils zur Ermittlung der Verfügbarkeit des Kommunikationskanals 15 zwischen den Datenübertragungseinheiten 10, 10' - genauer gesagt zwischen den Datenausgabe-/Datenempfangseinheiten 30, 30' -, welche jeweils in Verbindung mit der zugehörigen Echtzeitanwendung 20, 20' stehen.

Bei den in der Figur 1 dargestellten Ausführungsbeispielen für Datenübertragungseinheiten 10, 10' handelt es sich um identisch aufgebaute Datenübertragungseinheiten. D.h., sowohl die erste als auch die zweite Datenübertragungseinheit 10, 10' können jeweils als sendende als auch als empfangende Dateneinheit fungieren.

Im Folgenden wird der Aufbau der Datenübertragungseinheiten 10, 10' zur Vereinfachung und aufgrund des identischen Aufbaus nur am Beispiel der ersten Datenübertragungseinheit 10 beschrieben. So ist weiter eine Verfügbarkeitsausgabeeinheit 41 als Teil der Verfügbarkeitsermittlungseinheit 40 vorgesehen, welche zur Ausgabe eines Verfügbarkeitsindikators für den Kommunikationskanal 15 ausgebildet ist. Der Verfügbarkeitsindikator kann von der Echtzeitanwendung 20 mittels einer Datenübertragungsanfrageeinheit 42 erfragt werden.

Die Datenausgabe-/Datenempfangseinheit 30 ist dazu konfiguriert, Datenpakete zuverlässig innerhalb eines festgelegten Zeitfensters (als maximal zulässige Datenübertragungszeit) über den Kommunikationskanal 15 zu übertragen. Die Verfügbarkeitsermittlungseinheit 40 ermittelt hierfür im noch zu erläuternden Zusammenspiel mit der empfängerseitigen Verfügbarkeitsermittlungseinheit 40' die Verfügbarkeit des Kommunikationskanals 15. Der ermittelte Verfügbarkeitsindikator kann mit Hilfe der Verfügbarkeitsausgabeeinheit 41 an die Echtzeitanwendung 20 übertragen werden.

Im Rahmen der hier vorgeschlagenen Datenübertragungsverfahren wird in einem ersten Schritt von der Datenübertragungseinheit 10 eine Datenübertragungsanfrage von der Echtzeitanwendung 20 empfangen. Die Verfügbarkeitsermittlungseinheit 40 ermittelt dann die Verfügbarkeit des Kommunikationskanals 15. Als Teil der Datenübertragungsanfrage können Informationen zur Datenmenge und/oder zur maximal zulässigen Datenübertragungszeit und/oder zur maximal zulässigen Übertragungsfehlerrate an die Datenübertragungseinheit 10, insbesondere an die Verfügbarkeitsermittlungseinheit 40, von der Echtzeitanwendung 20 als Zuverlässigkeitsanforderungen übertragen werden.

Die Verfügbarkeitsermittlungseinheit 40 ermittelt unter Hinzunahme der mitgeteilten Zuverlässigkeitsanforderungen für die zu übertragenden Daten die Verfügbarkeit des Kommunikationskanals 15.

Die Verfügbarkeit kann dann mit Hilfe der Verfügbarkeitsausgabeeinheit 41 an die Echtzeitanwendung 20 übermittelt werden. Die Verfügbarkeitsermittlungseinheit 40 stellt im Wesentlichen fest, ob der Datenübertragungsanfrage seitens der Echtzeitanwendung 20 stattgegeben werden kann, weil die angefragte Datenübertragung mit der geforderten Zuverlässigkeit durchgeführt werden kann.

Die Verfügbarkeit des Kommunikationskanals 15 wird beispielsweise mit dem Verfügbarkeitsindikator angezeigt, der einen binären Wert AI annehmen kann, wobei der Wert AI=1 beschreibt, dass der Kommunikationskanal 15 in der erforderlichen Zuverlässigkeit zur Verfügung gestellt werden kann. Die Ausgabe des Wertes AL=0 sagt hingegen aus, dass der Kommunikationskanal 15 nicht mit der geforderten Zuverlässigkeit bereitgestellt werden kann.

Im beschriebenen Ausführungsbeispiel möchte die Echtzeitanwendung 20 über einen Kommunikationskanal 15 mit der Echtzeitanwendung 20' mit bestimmten Zuverlässigkeitsanforderungen kommunizieren. Die Echtzeitanwendung 20 möchte beispielsweise an die Echtzeitanwendung 20' bestimmte Information übertragen. Ebenso kann die Echtzeitanwendung 20' Informationen an die Echtzeitanwendung 20 übertragen. Beispielsweise ist es möglich, dass die Echtzeitanwendung 20' zyklisch Daten unter Verwendung der Datenübertragungseinheit 10' von der Echtzeitanwendung 20 abfragt.

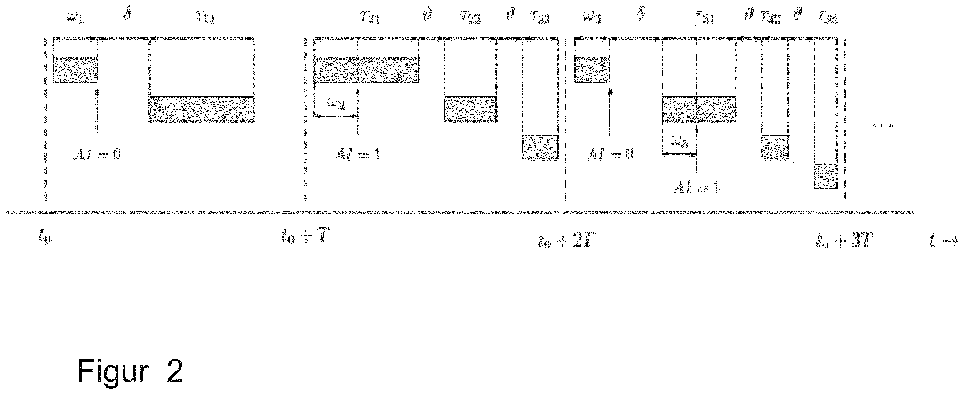

Im Folgenden werden die hier vorgeschlagen Verfahren zur Datenübertragung beispielhaft unter der Annahme erläutert, dass die erste Datenübertragungseinheit 10 als Sender Daten an die zweite Datenübertragungseinheit 10' übertragen möchte. Im Hinblick auf die Beispiele in der Figur 2 werden im Folgenden zum besseren Verständnis die entsprechenden Bezugszeichen der Figur 2 verwendet.

Zuerst (Schritt a) empfängt die erste Datenübertragungseinheit 10 eine Datenübertragungsanfrage für ein Datenpaket $\tau_{11}$, $\tau_{21}$, $\tau_{22}$, $\tau_{23}$, $\tau_{31}$, $\tau_{32}$, $\tau_{33}$ von der mit der Datenübertragungseinheit 10 betriebsmäßig verbundenen Echtzeitanwendung 20. Dann (Schritt b) überträgt die Datenausgabe-/Datenempfangseinheit 30 unter Kontrolle der Verfügbarkeitsermittlungseinheit 40 einen ersten Abschnitts $\omega_1$, $\omega_2$, $\omega_3$ des Datenpakets $\tau_{11}$, $\tau_{21}$, $\tau_{22}$, $\tau_{23}$, $\tau_{31}$, $\tau_{32}$, $\tau_{33}$ an die empfängerseitige zweite Datenübertragungseinheit 10' über den Kommunikationskanal 15.

An der zweiten Datenübertragungseinheit 10' wird zunächst (Schritt i) mit der dortigen zweiten Datenausgabe-/Datenempfangseinheit 30' der erste Abschnitt $\omega_1$, $\omega_2$, $\omega_3$ des Datenpakets $\tau_{11}$, $\tau_{21}$, $\tau_{22}$, $\tau_{23}$, $\tau_{31}$, $\tau_{32}$, $\tau_{33}$ empfangen, der von der senderseitigen ersten Datenübertragungseinheit 10 über den Kommunikationskanal 15 gesendet wurde. Dann (Schritt ii) bestimmt die zweite Verfügbarkeitsermittlungseinheit 40' der zweiten Datenübertragungseinheit 10' die Verfügbarkeit des Kommunikationskanals 15 basierend auf während des Empfangens des ersten Abschnitts $\omega_1$, $\omega_2$, $\omega_3$ des Datenpakets $\tau_{11}$, $\tau_{21}$, $\tau_{22}$, $\tau_{23}$, $\tau_{31}$, $\tau_{32}$, $\tau_{33}$ gemessenen Parametern des Kommunikationskanals 15 und basierend auf geschätzten Parametern des Kommunikationskanals 15 für den noch zur Verfügung stehenden Rest einer vorbestimmten maximal zulässigen Datenübertragungszeit T für die Übertragung des Datenpakets $\tau_{11}$, $\tau_{21}$, $\tau_{22}$, $\tau_{23}$, $\tau_{31}$, $\tau_{32}$, $\tau_{33}$. Danach (Schritt iii) sendet die zweite Verfügbarkeitsermittlungseinheit 40' einen Verfügbarkeitsanzeiger AI zur Anzeige der Verfügbarkeit des Kommunikationskanals 15 an die senderseitige erste Datenübertragungseinheit 10 mittels der zweiten Datenausgabe-/Datenempfangseinheit 30' über die erste Datenausgabe-/Datenempfangseinheit 30 der ersten Datenübertragungseinheit 10 an die erste Verfügbarkeitsermittlungseinheit 40.

Die Ermittlung der Verfügbarkeit des Kommunikationskanals 15 durch die zweite Verfügbarkeitsermittlungseinheit 40' kann u.a. abhängig von Parametern des Kommunikationskanals 15 erfolgen. Hierfür geeignete Kommunikationskanalparameter sind beispielsweise einer oder mehrere der folgenden: eine ACK-Statistik, eine NACK-Statistik, ein SINR-Wert, Übertragungsschwankungswerte des Kommunikationskanals in einem definierten Zeitbereich, die Kohärenzzeit des Kommunikationskanals, ein Betrag einer Differenzträgerinterferenz in einem orthogonalen Frequenzmultiplexsystem (OFDM), eine Dopplerfrequenz, ein CQI-Wert, ein RSSI-Wert, ein RSRQ-Wert, ein RSCP-Wert, ein MIMO-Rank-Wert, ein Ec/Io-Wert, ein QCI-Wert. Zur Überwachung und/oder Ermittlung einer wahlweisen Anzahl dieser genannten Parameter weisen die Datenübertragungseinheiten 10, 10' und/oder die Verfügbarkeitsermittlungseinheiten 40, 40' jeweils eine entsprechende Kommunikationskanalparametereinheit 50, 50' auf.

An der ersten Datenübertragungseinheit 10 wird dann (Schritt c) mittels der dortigen Datenausgabe-/Datenempfangseinheit 30 der Verfügbarkeitsindikators AI für den Kommunikationskanal 15 von der empfängerseitigen zweiten Datenübertragungseinheit 10' empfangen.

Nun (Schritt d) wird, unter Kontrolle der ersten Verfügbarkeitsermittlungseinheit 40, wenn der Verfügbarkeitsindikator AI anzeigt, dass der Kommunikationskanal 15 verfügbar ist, die erste Datenausgabe-/Datenempfangseinheit 30 für eine erfolgreiche Übertragung innerhalb des noch verfügbaren Rests der durch die Echtzeitanwendung 20 bzw. 20' bestimmten maximal zulässigen Datenübertragungszeit T der noch zu übertragenden Daten des Datenpakets $\tau_{11}$, $\tau_{21}$, $\tau_{22}$, $\tau_{23}$, $\tau_{31}$, $\tau_{32}$, $\tau_{33}$

für das Datenpaket $\tau_{11}$, $\tau_{21}$, $\tau_{22}$, $\tau_{23}$, $\tau_{31}$, $\tau_{32}$, $\tau_{33}$ konfiguriert. Dann wird der Rest des Datenpakets $\tau_{11}$, $\tau_{21}$, $\tau_{22}$, $\tau_{23}$, $\tau_{31}$, $\tau_{32}$, $\tau_{33}$ von der ersten Datenausgabe-/Datenempfangseinheit 30 an die zweite Datenausgabe-/Datenempfangseinheit 30' übertragen. Entsprechend wird dort (Schritt iv) der Rest des Datenpakets $\tau_{11}$, $\tau_{21}$, $\tau_{22}$, $\tau_{23}$, $\tau_{31}$, $\tau_{32}$, $\tau_{33}$ von zweiten Datenausgabe-/Datenempfangseinheit 30' empfangen.

Bevorzugt beinhaltet das Konfigurieren der ersten Datenausgabe-/Datenempfangseinheit 30 zur Übertragung der noch zu übertragenden Daten des Datenpakets $\tau_{11}$, $\tau_{21}$, $\tau_{22}$, $\tau_{23}$, $\tau_{31}$, $\tau_{32}$, $\tau_{33}$ ein Einstellen der Anzahl und der Länge noch zu übertragender Datenblöcke des Datenpakets $\tau_{11}$, $\tau_{21}$, $\tau_{22}$, $\tau_{23}$, $\tau_{31}$, $\tau_{32}$, $\tau_{33}$ unter Berücksichtigung zu erwartender Übertragungswiederholungen einzelner Datenblöcke.

Im Schritt a) werden von der Echtzeitanwendung 20 Informationen zur Datenmenge und/oder zur maximal zulässigen Datenübertragungszeit T und/oder zu einer maximal zulässigen Übertragungsfehlerrate an die senderseitige erste Datenübertragungseinheit 10 mitgeteilt. Diese Informationen können auch der empfängerseitigen zweiten Datenübertragungseinheit 10' mit dem einen ersten Abschnitt $\omega_1$, $\omega_2$, $\omega_3$ des Datenpakets $\tau_{11}$, $\tau_{21}$, $\tau_{22}$, $\tau_{23}$, $\tau_{31}$, $\tau_{32}$, $\tau_{33}$ übermittelt werden. Alternativ oder zusätzlich können diese Informationen auch bereits in der senderseitigen ersten bzw. empfängerseitigen zweiten Datenübertragungseinheit 10 bzw. 10' vorkonfiguriert sein. Es ist auch möglich, dass diese Informationen an einem zentralen Ort im Kommunikationssystem, z.B. auf einem zentralen Server, gespeichert sind und von dort von den Datenübertragungseinheiten 10, 10' abgerufen werden können.

Das Übertragen des ersten Abschnitts $\omega_1$, $\omega_2$, $\omega_3$ des Datenpakets $\tau_{11}$, $\tau_{21}$, $\tau_{22}$, $\tau_{23}$, $\tau_{31}$, $\tau_{32}$, $\tau_{33}$ dient als Grundlage zur empfängerseitigen Vorhersage der Verfügbarkeit des Kommunikationskanals 15 für den noch zur Verfügung stehenden Übertragungshorizont. Der noch verbleibende Übertragungshorizont bestimmt sich dabei als die Differenz aus der geforderten maximal zulässigen Datenübertragungszeit T für das Datenpaket $\tau_{11}$, $\tau_{21}$, $\tau_{22}$, $\tau_{23}$, $\tau_{31}$, $\tau_{32}$, $\tau_{33}$ abzüglich der Zeitdauer für eine oder ggf. mehrere (im Zusammenhang mit der Figur 2 noch zu erläuternde) bereits erfolgte Übertragungen des ersten Abschnitts $\omega_1$, $\omega_2$, $\omega_3$ innerhalb der maximal zulässigen Datenübertragungszeit T.

Die Länge des ersten Abschnitts $\omega_1$, $\omega_2$, $\omega_3$ des Datenpakets $\tau_{11}$, $\tau_{21}$, $\tau_{22}$, $\tau_{23}$, $\tau_{31}$, $\tau_{32}$, $\tau_{33}$ wird beispielsweise durch Vorgabe oder Einstellung einer bestimmten Anzahl von Informationssymbolen und/oder Zeitschlitzen bestimmt.

Während der Übertragung des ersten Abschnitts $\omega_1$, $\omega_2$, $\omega_3$ des Datenpakets $\tau_{11}$, $\tau_{21}$, $\tau_{22}$, $\tau_{23}$, $\tau_{31}$, $\tau_{32}$, $\tau_{33}$ werden Parameter des Kommunikationskanals 15 an der empfängerseitigen Datenübertragungseinheit 10' gemessen. Die gemessenen Parameter, besonders deren Zeitvarianz, fungieren als Grundlage für die Vorhersage der Verfügbarkeit des Kommunikationskanals 15 im Hinblick auf den noch verfügbaren Übertragungshorizont T. Bei sehr schnell schwankenden Parametern des Kommunikationskanals 15 wird der erste Abschnitt $\omega_1$, $\omega_2$, $\omega_3$ bevorzugt kurz eingestellt. Bei langsam schwankenden Parametern des Kommunikationskanals 15 wird der erste Abschnitt $\omega_1$, $\omega_2$, $\omega_3$ bevorzugt lang eingestellt. Bevorzugt wird die Länge des ersten Abschnitts basierend auf der Kohärenzzeit des Kommunikationskanals 15 bestimmt.

Bevorzugt ist die senderseitige erste Datenübertragungseinheit 10 konfiguriert, dann, wenn die Verfügbarkeitsanzeige AI anzeigt, dass der Kommunikationskanal 15 - entsprechend der geforderten Zuverlässigkeitsanforderungen seitens der Echtzeitanwendungen 20, 20' - nicht verfügbar ist, die aktuelle Übertragung des Datenpakets $\tau_{11}$, $\tau_{21}$, $\tau_{22}$, $\tau_{23}$, $\tau_{31}$, $\tau_{32}$, $\tau_{33}$ abzubrechen (Schritt e).

Bevorzugt ist die senderseitige erste Datenübertragungseinheit 10 weiter konfiguriert, nach einer vorbestimmten Pause $\delta$, das Verfahren ab dem Schritt b) zu wiederholen (Schritt f), falls noch genügend Zeit für eine Übertragung des Datenpakets $\tau_{11}$, $\tau_{21}$, $\tau_{22}$, $\tau_{23}$, $\tau_{31}$, $\tau_{32}$, $\tau_{33}$ bis zum Ablauf der maximal zulässigen Datenübertragungszeit T für das Datenpaket $\tau_{11}$, $\tau_{21}$, $\tau_{22}$, $\tau_{23}$, $\tau_{31}$, $\tau_{32}$, $\tau_{33}$ zur Verfügung steht. Das heißt, die senderseitige erste Datenübertragungseinheit 10 versucht in dieser Ausführung solange eine Übertragung des Datenpakets $\tau_{11}$, $\tau_{21}$, $\tau_{22}$, $\tau_{23}$, $\tau_{31}$, $\tau_{32}$, $\tau_{33}$ innerhalb der maximal zulässigen Datenübertragungszeit T bei verfügbarem Kommunikationskanal 15 noch möglich ist.

In einer alternativen Ausführung ist die senderseitige erste Datenübertragungseinheit 10 konfiguriert, falls der Verfügbarkeitsindikator AI anzeigt, dass der Kommunikationskanal 15 nicht verfügbar ist (AI=0), die Datenübertragungsverbindung zu der zugehörigen empfängerseitigen zweiten Datenübertragungseinheiten 10' abzubrechen und den zugeordneten Kommunikationskanal 15 zur Verwendung durch andere Datenübertragungseinheiten freizugeben.

In einer besonderen Ausführung ist die empfängerseitige zweite Datenübertragungseinheit 10' im Schritt iv) konfiguriert, einen Wert für den kumulierten Transinformationsgehalt (accumulated mutual information), ACMI, nach jeder Übertragungswiederholung eines Datenblocks des zu übertragenden Datenpakets $\tau_{11}$, $\tau_{21}$, $\tau_{22}$, $\tau_{23}$, $\tau_{31}$, $\tau_{32}$, $\tau_{33}$ zu berechnen und den berechneten ACMI-Wert mit einem ACMI-Wert, der basierend auf geschätzten Parameter für den Kommunikationskanal 15 berechnet wurde, zu vergleichen. Basierend auf dem Vergleich übermittelt die empfängerseitige zweite Datenübertragungseinheit 10' dann eine angepasste Datenblockgröße an die senderseitige erste Datenübertragungseinheit 10, die diesen Wert dann für die Konfiguration der Datenblöcke verwendet. Damit können Abweichungen zwischen dem berechneten ACMI-Wert und dem geschätzten ACMI-Wert kompensiert werden.

Abschließen wird die hier vorgeschlagene Datenübertragung zwischen den Datenübertragungseinheiten 10 und 10' in der Figur 1 anhand von drei unterschiedlichen Fällen in der Figur 2 veranschaulicht.

Beispiel 1: Zum Zeitpunkt $t_1$ im ersten Zeitintervall $[t_0, t_0 + T]$ steht an der ersten Datenübertragungseinheit 10 ein Datenpaket $m_1$ zu Übertragung bereit. Während der Übertragung des ersten Abschnitts $\omega_1$ (subframe) des codierten Datenpakets $\tau_{11}$ würde an der empfängerseitigen Datenübertragungseinheit 10' festgestellt, dass der Kommunikationskanal 15 nicht zuverlässig genug ist. Daher übermittelt die empfängerseitige Datenübertragungseinheit 10' an die empfängerseitige Datenübertragungseinheit 10 den Verfügbarkeitsindikator $AI = 0$, der anzeigt, dass der Kommunikationskanal 15 nicht verfügbar ist. Nach einer vorbestimmten Pause mit $\delta$ Zeitschlitzen versucht die senderseitige Datenübertragungseinheit 10 das Datenpaket $\tau_{11}$ erneut zu übertragen. Beim zweiten Versuch stellt die senderseitige Datenübertragungseinheit 10' fest, dass der Kommunikationskanal 15 für die zur Übertragung des Datenpakets benötigte Zeitdauer innerhalb der zulässigen maximalen Übertragungszeitdauer ausreichend zuverlässig verfügbar ist und teilt dies der senderseitigen Datenübertragungseinheit 10 mittels des Verfügbarkeitsindikators $AI = 1$ mit. Die Datenübertragung wird daraufhin bis zum Ende des Datenblocks $\tau_{11}$ vorgesetzt.

Beispiel 2: Zum Zeitpunkt der Übertragung des Datenpakets $m_2$ im zweiten Zeitintervall $[t_0 + T, t_0 + 2T]$ wird der Kommunikationskanal 15 seitens der empfängerseitigen Datenübertragungseinheit 10' mittels des Verfügbarkeitsindikators $AI = 1$ der senderseitigen Datenübertragungseinheit 10 als zuverlässig angezeigt. Entsprechend werden drei Datenpakete $\tau_{21}$, $\tau_{22}$ und $\tau_{23}$ bis zum Ablauf der maximalen Übertragungszeit T übertragen. Wie bereits erwähnt, wird die Größe der Datenpakete $\tau_{21}$, $\tau_{22}$ und $\tau_{23}$ entsprechend den Eigenschaften des Kommunikationskanals 15 und der verbleibenden Zeit bis zum Ende der maximalen Übertragungszeit T eingestellt.

Beispiel 3: Die Übertragung des Datenpakets $m_3$ im dritten Zeitintervall $[t_0 + 2T, t_0 + 3T]$ unterscheidet sich von den beiden vorhergehenden Beispielen 1 und 2 lediglich darin, dass aufgrund der Nichtverfügbarkeit des Kommunikationskanals 15 beim ersten Übertragungsversuch die gesamte Datenübertragung um die vorbestimmte Pause $\delta$ verzögert wurde.

Abschließend sei angemerkt, dass die Datenübertragung in jedem der Zeitintervalle in der Figur 2 zu demselben Teilnehmer oder zu verschiedenen Teilnehmern innerhalb des Dienstbereichs einer Basisstation des zellularen Funkkommunikationsnetzes gehören kann. Im letzteren Fall könnte das erste Datenpaket $m_1$ für einen ersten Teilnehmer, das zweite Datenpaket $m_2$ für einen zweiten Teilnehmer, usw. bestimmt sein.

Desweiteren muss die maximal zulässige Übertragungszeit T nicht unbedingt konstant sein, sondern kann in verschiedenen Zeitintervallen unterschiedlich sein. Beispielsweise könnte die Datenübertragung des ersten Teilnehmers als eine Zuverlässigkeitsanforderung eine maximale Übertragungszeit $T_1$ erfordern, während die Datenübertragung des zweiten Teilnehmers als eine Zuverlässigkeitsanforderung eine maximale Übertragungszeit $T_2$ erfordert, wobei $T_1 \neq T_2$ gilt. Schließlich ist es möglich, nachdem der Kommunikationskanal 15 aufgrund der Zuverlässigkeitsanforderungen als nichtverfügbar für einen bestimmten Teilnehmer eingestuft worden ist ($AI = 0$), den Kommunikationskanal 15 als Funk-Ressource während der Pause $\delta$ anderen Teilnehmern, für die der Kanal als verfügbar ($AI = 1$) eingestuft wird, zuzuweisen. Damit kann die Kapazität des gesamten Kommunikationssystems verbessert werden.

**Patentansprüche**

1. Verfahren zur Datenübertragung an einer senderseitigen Datenübertragungseinheit (10) umfassend die Schritte:

   a) Empfangen einer Datenübertragungsanfrage für eine Nachricht von einer mit der senderseitigen Datenübertragungseinheit (10) betriebsmäßig verbundenen sicherheitsrelevanten Echtzeitanwendung (20);
   b) Übertragen eines ersten Abschnitts ($\omega_1$, $\omega_2$, $\omega_3$) der Nachricht an eine empfängerseitige Datenübertragungseinheit (10') über einen Kommunikationskanal (15) für eine Bestimmung der Verfügbarkeit des Kommunikationskanals (15) basierend auf während eines Empfangens des ersten Abschnitts ($\omega1$, $\omega2$, $\omega3$) der Nachricht gemessenen Parametern des Kommunikationskanals (15) und basierend auf geschätzten Parametern des Kommunikationskanals (15) für den noch zur Verfügung stehenden Rest einer vorbestimmten maximal zulässigen Datenübertragungszeit (T) für die Übertragung der Nachricht;
   c) Empfangen eines Verfügbarkeitsindikators (AI) für den Kommunikationskanal (15) von der empfängerseitigen Datenübertragungseinheit (10') als Ergebnis der Bestimmung der Verfügbarkeit des Kommunikationskanals (15); und
   d) wenn der Verfügbarkeitsindikator (AI) anzeigt, dass der Kommunikationskanal (15) verfügbar ist, Konfigurieren der noch zu übertragenden Daten der Nachricht für eine erfolgreiche Übertragung innerhalb des noch verfügbaren Rests der durch die Echtzeitanwendung (20) vorbestimmten maximal zulässigen Datenübertragungszeit (T) für die Übertragung der Nachricht, und Übertragen der noch zu übertagenden Daten der Nachricht, wobei

   das Konfigurieren der zu übertragenden Daten der Nachricht für die Übertragung der restlichen Nachricht beinhaltet: Einstellen der Anzahl und der Länge noch zu übertragender Datenblöcke der Nachricht unter Berücksichtigung zu erwartender Übertragungswiederholungen einzelner Datenblöcke.

2. Verfahren nach Anspruch 1, **gekennzeichnet durch** die Schritte:

e) wenn die Verfügbarkeitsanzeige (AI) anzeigt, dass der Kommunikationskanal (15) nicht verfügbar ist, Abbrechen der Übertragung der Nachricht; und

f) nach einer vorbestimmten Pause ($\delta$), Wiederholen des Verfahrens ab Schritt b), falls noch genügend Zeit für die Übertragung der Nachricht bis zum Ablauf der maximal zulässigen Datenübertragungszeit (T) für der Nachricht zur Verfügung steht.

3. Verfahren gemäß einem der Ansprüche 1 oder 2, **dadurch gekennzeichnet, dass** die senderseitige Datenübertragungseinheit (10), falls der Verfügbarkeitsindikator (AI) anzeigt, dass der Kommunikationskanal nicht verfügbar ist, eine Datenübertragungsverbindung zu der zugehörigen empfängerseitigen Datenübertragungseinheiten (10') abbricht und den zugeordneten Kommunikationskanal (15) zur Verwendung durch andere Datenübertragungseinheiten freigibt.

4. Verfahren zur Datenübertragung an einer empfängerseitigen Datenübertragungseinheit (10') umfassend die Schritte:

i) Empfangen eines ersten Abschnitts ($\omega_1$, $\omega_2$, $\omega_3$) einer Nachricht von einer betriebsmäßig mit einer senderseitigen Datenübertragungseinheit (10) verbundenen sicherheitsrelevanten Echtzeitanwendung (20) über einen Kommunikationskanal (15);

ii) Bestimmung der Verfügbarkeit des Kommunikationskanals (15) basierend auf während des Empfangens des ersten Abschnitts ($\omega_1$, $\omega_2$, $\omega_3$) der Nachricht gemessenen Parametern des Kommunikationskanals (15) und basierend auf geschätzten Parametern des Kommunikationskanals (15) für den noch zur Verfügung stehenden Rest einer vorbestimmten maximal zulässigen Datenübertragungszeit (T) für die Übertragung der noch zu übertragenden Daten der Nachricht;

iii) Senden des Verfügbarkeitsanzeigers (AI) an die senderseitige Datenübertragungseinheit (10); und

iv) wenn die Verfügbarkeitsanzeige (AI) anzeigt, dass der Kommunikationskanal (15) verfügbar ist, Empfangen der restlichen Daten der Nachricht.

5. Verfahren gemäß Anspruch 4, gekennzeichnet im Schritt iv) durch Berechnen eines Werts für den kumulierten Transinformationsgehalt (accumulated mutual information), ACMI, nach jeder Übertragungswiederholung eines Datenblocks der Nachricht; Vergleichen des berechneten ACMI-Werts mit dem ACMI-Wert gemäß der geschätzten Parameter für den Kommunikationskanal (15); und Übermitteln einer angepassten Datenblockgröße an die senderseitige Datenübertragungseinheit (10) zur Kompensation von Abweichungen zwischen dem berechneten ACMI-Wert und dem geschätzten ACMI-Wert.

6. Senderseitige Datenübertragungseinheit (10) zur Bereitstellung eines Kommunikationskanals (15) für eine Echtzeitanwendung (20), wobei die Datenübertragungseinheit (10) aufweist: mindestens eine Datenausgabe-/Empfangseinheit (30) und mindestens einer Verfügbarkeitsermittlungseinheit (40) zur Ermittlung der Verfügbarkeit eines Kommunikationskanals (15) zwischen der Datenausgabe-/Empfangseinheit (30) der Datenübertragungseinheit (10) und mindestens einer empfängerseitigen Datenübertragungseinheit (10'), wobei die Verfügbarkeitsermittlungseinheit (40) zur Durchführung eines Verfahrens gemäß einem der Ansprüche 1 bis 3 eingerichtet ist.

7. Empfängerseitige Datenübertragungseinheit (10') zur Bereitstellung eines Kommunikationskanals (15) für eine Echtzeitanwendung (20'), wobei die empfängerseitige Datenübertragungseinheit (10') aufweist: mindestens eine Datenausgabe-/Empfangseinheit (30') und mindestens eine Verfügbarkeitsermittlungseinheit (40') zur Ermittlung der Verfügbarkeit eines Kommunikationskanals (15) zwischen der Datenausgabe-/Empfangseinheit (30') der Datenübertragungseinheit (10') und mindestens einer senderseitigen Datenübertragungseinheit (10), wobei die Verfügbarkeitsermittlungseinheit (40') zur Durchführung eines Verfahrens gemäß einem der Ansprüche 4 bis 5 eingerichtet ist.

8. Datenkommunikationssystem mit wenigsten einer senderseitigen Datenübertragungseinheit (10) gemäß Anspruch 6 und einer empfängerseitigen Datenübertragungseinheit (10') gemäß Anspruch 7.

9. Fahrzeug mit einer senderseitigen Datenübertragungseinheit (10) nach Anspruch 6 und/oder einer empfängerseitigen Datenübertragungseinheit (10') nach Anspruch 7, wobei eine Recheneinheit des Fahrzeugs die Echtzeitanwendung (20; 20'), insbesondere eine Fahrerassistenzfunktionalität, implementiert.

Claims

1. Method for data transmission at a transmitter-side data transmission unit (10) comprising the steps:

   a) receiving a data transmission request for message from a safety-relevant real-time application (20) which is operatively connected to the transmitter-side data transmission unit (10);
   b) transmitting a first portion ($\omega_1$, $\omega_2$, $\omega_3$) of the message to a receiver-side data transmission unit (10') via a communication channel (15) for the purpose of determining the availability of the communication channel (15) on the basis of parameters of the communication channel (15) measured during reception of the first portion ($\omega_1$, $\omega_2$, $\omega_3$) of the message and on the basis of estimated parameters of the communication channel (15) for the still available remainder of a predetermined maximum permissible data transmission time (T) for the transmission of the message;
   c) receiving an availability indicator (AI) for the communication channel (15) from the receiver-side data transmission unit (10') as the result of determining the availability of the communication channel (15); and
   d) if the availability indicator (AI) shows that the communication channel (15) is available, configuring the data of the message yet to be transmitted for a successful transmission within the still available remainder of the maximum permissible data transmission time (T) predetermined by the real-time application (20) for the transmission of the message, and transmitting the data of the message yet to be transmitted, wherein
   the configuration of the data of the message to be transmitted for the transmission of the remaining message includes: adjustment of the number and length of data blocks of the message yet to be transmitted taking account of transmission repetitions of individual data blocks that are to be expected.

2. Method according to Claim 1, **characterized by** the steps:

   e) if the availability indicator (AI) shows that the communication channel (15) is not available, termination of the transmission of message; and
   f) after a predetermined pause ($\delta$), repetition of the method from step b), if sufficient time for the transmission of the message is still available up to the lapse of the maximum permissible data transmission time (T) for the message.

3. Method according to either of Claims 1 and 2, **characterized in that** the transmitter-side data transmission unit (10), if the availability indicator (AI) shows that the communication channel is not available, terminates a data transmission link to the associated receiver-side data transmission units (10') and releases the assigned communication channel (15) for use by other data transmission units.

4. Method for data transmission at a receiver-side data transmission unit (10') comprising the steps:

   i) receiving a first portion ($\omega_1$, $\omega_2$, $\omega_3$) of a message from a safety-relevant real-time application (20) operatively connected to a transmitter-side data transmission unit (10) via a communication channel (15) ;
   ii) determining the availability of the communication channel (15) on the basis of parameters of the communication channel (15) measured during the reception of the first portion ($\omega_1$, $\omega_2$, $\omega_3$) of the message and on the basis of estimated parameters of the communication channel (15) for the still available remainder of a predetermined maximum permissible data transmission time (T) for the transmission of the data of the message yet to be transmitted;
   iii) transmitting the availability indicator (AI) to the transmitter-side data transmission unit (10); and
   iv) receiving the remaining data of the message if the availability indicator (AI) shows that the communication channel (15) is available.

5. Method according to Claim 4, **characterized in** step iv) by calculating a value for the accumulated mutual information content (accumulated mutual information), ACMI, after each transmission repetition of a data block of the message; comparing the calculated ACMI value with the ACMI value according to the estimated parameters for the communication channel (15); and transmitting an adapted data block size to the transmitter-side data transmission unit (10) to compensate for deviations between the calculated ACMI value and the estimated ACMI value.

6. Transmitter-side data transmission unit (10) for providing a communication channel (15) for a real-time application (20), wherein the data transmission unit (10) comprises: at least one data output/reception unit (30) and at least one availability determination unit (40) for determining the availability of a communication channel (15) between the data output/reception unit (30) of the data transmission unit (10) and at least one receiver-side data transmission unit (10'), wherein the availability determination unit (40) is set up to perform a method according to any one of Claims 1 to 3.

7. Receiver-side data transmission unit (10') for providing a communication channel (15) for a real-time application (20'), wherein the receiver-side data transmission unit (10') comprises: at least one data output/reception unit (30') and at least one availability determination unit (40') for determining the availability of a communication channel (15) between the data output/reception unit (30') of the data transmission unit (10') and at least one transmitter-side data transmission unit (10), wherein the availability determination unit (40') is set up to perform a method according to any one of Claims 4 to 5.

8. Data communication system with at least one transmitter-side data transmission unit (10) according to Claim 6 and a receiver-side data transmission unit (10') according to Claim 7.

9. Vehicle with a transmitter-side data transmission unit (10) according to Claim 6 and/or a receiver-side data transmission unit (10') according to Claim 7, wherein a processor of the vehicle implements the real-time application (20; 20'), in particular a driver-assistance functionality.

**Revendications**

1. Procédé de transmission de données à une unité de transmission de données côté émetteur (10), comprenant les étapes suivantes :

    a) réception d'une demande de transmission de données pour un message en provenance d'une application en temps réel (20) relative à la sécurité reliée fonctionnellement à l'unité de transmission de données côté émetteur (10) ;
    b) transmission d'une première portion ($\omega_1$, $\omega_2$, $\omega_3$) du message au niveau de l'unité de transmission de données côté émetteur (10') par le biais d'un canal de communication (15) pour une détermination de la disponibilité du canal de communication (15) en se basant sur des paramètres du canal de communication (15) mesurés pendant une réception de la première portion ($\omega_1$, $\omega_2$, $\omega_3$) du message et en se basant sur des paramètres estimés du canal de communication (15) pour le restant encore disponible d'un temps de transmission de données (T) maximal autorisé prédéterminé pour la transmission du message ;
    c) réception d'un indicateur de disponibilité (AI) pour le canal de communication (15) en provenance de l'unité de transmission de données côté récepteur (10') en tant que résultat de la détermination de la disponibilité du canal de communication (15) ; et
    d) lorsque l'indicateur de disponibilité (AI) indique que le canal de communication (15) est disponible, configuration des données du message restant à transmettre pour une transmission réussie à l'intérieur du restant encore disponible du temps de transmission de données (T) maximal autorisé prédéterminé par l'application en temps réel (20), et transmission des données restant à transmettre du message,
la configuration des données à transmettre du message pour la transmission du message restant comprenant : réglage du nombre et de la longueur des blocs de données restant à transmettre du message en tenant compte des répétitions de transmission des blocs de données individuels.

2. Procédé selon la revendication 1, **caractérisé par** les étapes suivantes :

    e) lorsque l'indicateur de disponibilité (AI) indique que le canal de communication (15) n'est pas disponible, interruption de la transmission du message ; et
    f) après une pause ($\delta$) prédéterminée, répétition du procédé à partir de l'étape b) s'il reste encore suffisamment de temps disponible pour la transmission du message jusqu'à l'expiration du temps de transmission de données (T) maximal autorisé pour le message.

3. Procédé selon l'une des revendications 1 ou 2, **caractérisé en ce que** dans le cas où l'indicateur de disponibilité (AI) indique que le canal de communication n'est pas disponible, l'unité de transmission de données côté émetteur (10) interrompt une liaison de transmission de données avec les unités de transmission de données côté récepteur (10') associées et libère le canal de communication (15) attribué pour une utilisation par d'autres unités de transmission de données.

4. Procédé de transmission de données à une unité de transmission de données côté récepteur (10'), comprenant les étapes suivantes :

    i) réception, par le biais d'un canal de communication (15), d'une première portion ($\omega_1$, $\omega_2$, $\omega_3$) d'un message en provenance d'une application en temps réel (20) relative à la sécurité reliée fonctionnellement à une unité de transmission de données côté émetteur (10) ;
    ii) détermination de la disponibilité du canal de communication (15) en se basant sur des paramètres du canal de communication (15) mesurés pendant la réception de la première portion ($\omega_1$, $\omega_2$, $\omega_3$) du message et en se basant sur des paramètres estimés du canal de communication (15) pour le restant encore disponible d'un temps de transmission de données (T) maximal autorisé prédéterminé pour la transmission des données encore à transmettre du message ;

iii) émission d'un indicateur de disponibilité (AI) à l'unité de transmission de données côté émetteur (10) ; et

iv) lorsque l'indicateur de disponibilité (AI) indique que le canal de communication (15) est disponible, réception des données restantes du message.

5. Procédé selon la revendication 4, caractérisé à l'étape iv) par le calcul d'une valeur pour la teneur en informations mutuelles cumulées (accumulated mutual information), ACMI, après chaque répétition de transmission d'un bloc de données du message ; comparaison de la valeur ACMI calculée avec la valeur ACMI selon le paramètre estimé pour le canal de communication (15) ; et communication d'une taille de bloc de données adaptée à l'unité de transmission de données côté émetteur (10) en vue de compenser les écarts entre la valeur ACMI calculée et la valeur ACMI estimée.

6. Unité de transmission de données côté émetteur (10) destinée à fournir un canal de communication (15) pour une application en temps réel (20), l'unité de transmission de données (10) possédant : au moins une unité d'émission/réception de données (30) et au moins une unité de détermination de disponibilité (40) destinée à déterminer la disponibilité d'un canal de communication (15) entre l'unité d'émission/réception de données (30) de l'unité de transmission de données (10) et au moins une unité de transmission de données côté récepteur (10'), l'unité de détermination de disponibilité (40) étant conçue pour mettre en œuvre le procédé selon l'une des revendications 1 à 3.

7. Unité de transmission de données côté récepteur (10') destinée à fournir un canal de communication (15) pour une application en temps réel (20'), l'unité de transmission de données côté récepteur (10') possédant :

au moins une unité d'émission/réception de données (30') et au moins une unité de détermination de disponibilité (40') destinée à déterminer la disponibilité d'un canal de communication (15) entre l'unité d'émission/réception de données (30') de l'unité de transmission de données (10') et au moins une unité de transmission de données côté émetteur (10), l'unité de détermination de disponibilité (40') étant conçue pour mettre en œuvre le procédé selon l'une des revendications 4 à 5.

8. Système de communication de données comprenant au moins une unité de transmission de données côté émetteur (10) selon la revendication 6 et au moins une unité de transmission de données côté récepteur (10') selon la revendication 7.

9. Véhicule comprenant une unité de transmission de données côté émetteur (10) selon la revendication 6 et/ou une unité de transmission de données côté récepteur (10') selon la revendication 7, l'unité de calcul du véhicule mettant en œuvre l'application en temps réel (20, 20'), notamment une fonctionnalité d'assistance au conducteur.

Figur 1

EP 3 275 106 B1

Figur 2

EP 3 275 106 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1361690 A2

- DE 102013221649

**In der Beschreibung aufgeführte Nicht-Patentliteratur**

- Availability indication as key enabler for ultra-reliable communication in 5G. **SCHOTTEN HANS D et al.** 2014 EUROPEAN CONFERENCE ON NETWORKS AND COMMUNICATIONS (EUCNC). IEEE, 23. Juni 2014, 1-5
- Intelligent Transport Systems (ITS); Vehicular Communications; Basic Set of Applications. *Definitions, ETSI Technical Report TR 102 638 Rev. 1.1.1,* 2009
- **A. J. GOLDSMITH et al.** Adaptive coded modulation for fading channels. *IEEE Transactions on Wireless Communications,* Mai 1998, vol. 46 (5), 595-602

- Physical layer procedures (Release 8). *3GPP technical specification 36.213*
- **E. UHLEMANN et al.** Deadline dependent coding - a framework for wireless real-time communication. *International Conference on Real-Time Computing Systems and Applications,* Dezember 2000, 135-142
- **M. NI et al.** A channel feedback model with robust SINR prediction LTE systems. *IEEE European Conference on Antenna and Propagation, EuCAP,* 2013, 1866-1870